# EUROPEAN PATENT SPECIFICATION

(11) **EP 2 975 689 B1**
(45) Date of publication and mention of the grant of the patent: **23.09.2020**
(21) Application number: 14762309.4
(22) Date of filing: 14.03.2014
(51) Int. Cl.: H01Q 1/32, H01Q 1/22, H01Q 13/10

(54) **WINDOW GLASS FOR VEHICLE**
FENSTERGLAS FÜR FAHRZEUGE
VERRE DE FENÊTRE POUR VÉHICULE

(30) Priority: 14.03.2013 JP 2013051349
(43) Date of publication of application: 20.01.2016
(73) Proprietor: AGC Inc., Tokyo 100-8405 (JP)
(72) Inventor: KAGAYA, Osamu, Tokyo 100-8405 (JP); TAKAHASHI, Tomohiro, Tokyo 100-8405 (JP)
(74) Representative: Müller-Boré & Partner Patentanwälte PartG mbB
(86) International application number: PCT/JP2014/056936
(87) International publication number: WO 2014/142312

(56) References cited:
- EP-A1- 1 763 105
- EP-A2- 0 760 537
- JP-A- S62 131 606
- US-A1- 2007 247 379
- US-A1- 2007 247 379
- US-A1- 2012 098 716
- US-B1- 6 266 023

## Description

### TECHNICAL FIELD

The present invention relates to window glass for vehicle, provided with a conductive film.

### BACKGROUND ART

Window glass having a conductive film formed on an entire surface thereof, for the purposes of reducing heat entering a vehicle or removing fog on the window glass, is known. In addition, since there would be no space to provide a linear conductor antenna if the conductive film were provided on the entire surface of the window glass, it is known to make an outer edge of the conductive film recede from an outer edge of the window glass in order to form a clearance and provide the antenna conductor in the clearance, so that the conductive film and the antenna conductor may coexist (for example, refer to Patent Document 1). Document US 6 266 023 B1 discloses such a window glass vehicle.

### PRIOR ART DOCUMENTS

### PATENT DOCUMENTS

Patent Document 1: Japanese Laid-Open Patent Publication No. 9-175166

### DISCLOSURE OF THE INVENTION

### PROBLEM TO BE SOLVED BY THE INVENTION

However, there are cases in which an antenna gain of the antenna conductor deteriorates due to effects of the conductive film that has a large area and is provided on the window glass. One object of the present invention is to provide window glass for vehicle, that can reduce the effects of the conductive film on the antenna conductor.

### MEANS OF SOLVING THE PROBLEM

In order to achieve the above object, the present invention defines a window glass for vehicle according to claim 1.

### EFFECTS OF THE INVENTION

According to the present invention, it is possible to reduce the effects of the conductive film on the antenna conductor.

### BRIEF DESCRIPTION OF THE DRAWING

FIG. 1 is a plan view of window glass for vehicle;
FIG. 2 is a plan view, on an enlarged scale, illustrating a part of the window glass for vehicle in a state mounted on a vehicle;
FIG. 3 is a plan view of a conductive film formed with slots;
FIG. 4 is a plan view of the conductive film formed with the slots;
FIG. 5 is a plan view of the conductive film formed with the slots;
FIG. 6 is a plan view of the conductive film formed with the slots;
FIG. 7 is a plan view of the conductive film formed with the slots;
FIG. 8 is a plan view of the conductive film formed with the slots;
FIG. 9 illustrates measured results of an antenna gain for various slots;
FIG. 10 illustrates the measured results of the antenna gain for the various slots;
FIG. 11 illustrates the measured results of the antenna gain for the various slots;
FIG. 12 illustrates the measured results of the antenna gain for the various slots;
FIG. 13 illustrates the measured results of the antenna gain for the various slots; and
FIG. 14 illustrates the measured results of the antenna gain for the various slots.

### MODE OF CARRYING OUT THE INVENTION

A description will hereinafter be given of embodiments of the present invention with reference to the drawings. In the drawings used to describe the embodiments, directions refer to the directions in the figures unless otherwise indicated, and reference directions in the figures correspond to the directions indicated by symbols or reference numerals. In addition, directions that are parallel, perpendicular, or the like may tolerate an error to a certain extent that does not impair the effects of the present invention. Further, the present invention may be applied to a windshield mounted at the front of a vehicle, a rear window mounted at the rear of the vehicle, a side window mounted at the side of the vehicle, a roof glass mounted at the roof of the vehicle window, or the like.

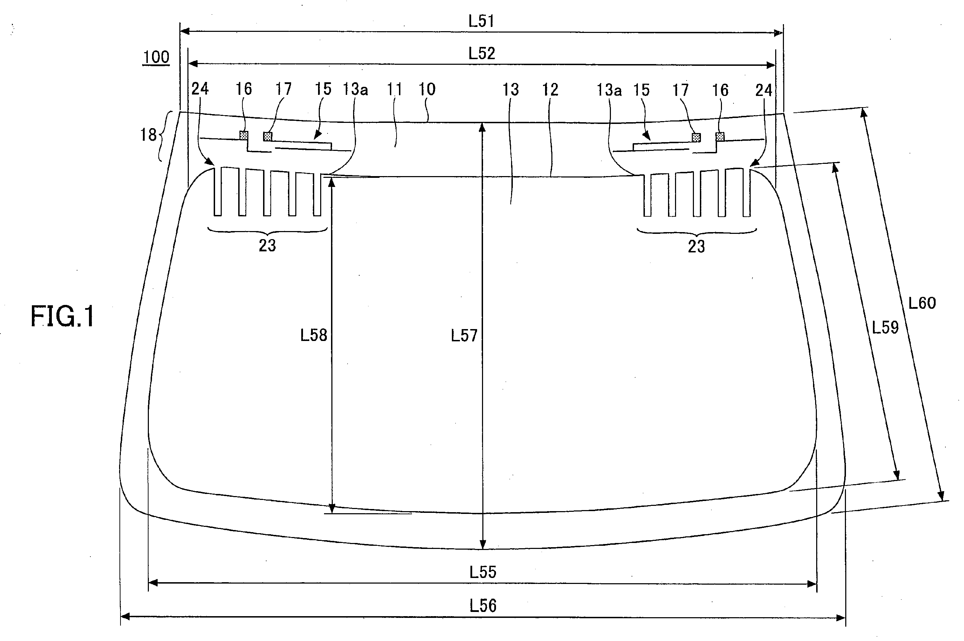

FIG. 1 is a plan view of window glass 100 for vehicle in one embodiment of the present invention. The window glass 100 includes a glass plate 11, a conductive film 13, and a linear conductor 15 forming an antenna conductor (hereinafter also referred to as a linear conductor antenna).

The glass plate 11 is a sheet-like dielectric that is transparent or semitransparent. The glass plate 11 may be laminated glass having a plurality of glass plates laminated via intermediate films.

The conductive film 13 is a film that is conductive and transparent or semitransparent. For example, the conductive film 13 is a conductive heat reflecting film that can reflect incoming heat from the outside. In addition, the conductive film 13 may be a conductive film for heater, that heats the window glass 100 when applied with a current, in order to suppress or remove fog, and the conductive film 13 is not limited to a particular usage.

The conductive film 13 may be stacked and provided on a surface of the glass plate 11, or may be stacked and provided inside the glass plate 11. In a case in which the glass plate 11 is the laminated glass, the conductive film 13 may be arranged between a first glass plate and a second glass plate forming the laminated glass. For example, the conductive film 13 may be arranged inside the intermediate film that bonds the first and second glass plates, or may be arranged between the intermediate film and one of the first and second glass plates.

The conductive film 13 may be coated on the surface of the glass plate by vapor deposition, or may be coated on a surface of a resin film (for example, polyethylene terephthalate, or the like), that is separate from the glass plate, by vapor deposition.

A film edge 12 at an outer edge of the conductive film 13 is located at a position receded by a predetermined distance in an inner in-plane direction (inward direction) from a glass edge 10 at an outer edge of the glass plate 11. A shape of the conductive film 13 may be similar to that of the window glass for vehicle. The window glass for vehicle normally has a trapezoidal shape, and the conductive film 13 may also have a similar trapezoidal shape. However, the shape of the conductive film 13 is not limited to a particular shape, and the conductive film 13 may have a polygonal shape such as a triangular shape, a rectangular shape, or the like. In addition, corner parts of the conductive film 13 may be curved.

The linear conductor antenna 15 is provided on the glass plate 11 so as to be accommodated within a region 18 formed between the glass edge 10 and the film edge 12, and not to overlap the conductive film 13 in the plan view. One or a plurality of linear conductor antennas 15 may be provided, and FIG. 1 illustrates an example in which two linear conductor antennas 15 are provided. In FIG. 1, the linear conductor antenna 15 is formed between the glass edge 10 and the film edge 12 of the conductive film 13 at an upper part of the window glass for vehicle, at right and left ends. However, the linear conductor antenna 15 may be formed at any location, including a central part at the upper part of the window glass for vehicle. In addition, the linear conductor antenna 15 may be formed between the glass edge 10 and the film edge 12 of the conductive film 13 at a right side or a left side of the window glass for vehicle.

The linear conductor antenna 15 is formed by a linear conductor, and for example, may be a conductor printed on the glass plate 11, or a conductor (for example, wire conductor) filled into the glass plate 11.

The linear conductor antenna 15 may be an antenna formed on a sheet-like or film-like dielectric, and in this case, the sheet-like or film-like dielectric having the linear conductor antenna 15 formed thereon is provided on the surface of the glass plate 11. Particular examples of the sheet-like dielectric include resin substrates, such as printed circuit boards, flexible printed circuit boards, or the like, and examples of the film-like dielectric include synthetic resin films, or the like.

The linear conductor antenna 15 is fed power via electrodes 16 and 17. The electrodes 16 and 17 are feeding parts provided on the glass plate 11 so as to be accommodated within the region 18.

The conductive film 13 includes a slot 23 having an open end 24 that opens at an opposing outer edge part 13a opposing the antenna conductor located on the outer side of the film edge 12 at the outer edge of the conductive film 13. In other words, the slot 23 is provided at the opposing outer edge part 13a of the film edge 12, opposing the linear conductor antenna 15 located in an outer in-plane direction of the conductive film 13. The slot 23 is an elongated part where the conductive film 13 is removed or no conductive film is formed. The slot 23 may be formed by a single slot, or may be formed by a plurality of slots.

The slot 23 may be formed by irradiating laser on the conductive film 13 in order to remove the conductive film 13. Alternatively, the slot 23 may be formed by not forming the conductive film at a slot part at the beginning, by masking the slot part when forming the conductive film 13. A sub slot and an independent slot which will be described later may be formed in a manner similar to the slot 23.

FIG. 1 illustrates an example in which five slots are formed in the conductive film 13 with respect to each of the two linear conductive antennas 15. The plurality of slots respectively have the open end 24 that opens at the opposing outer edge part 13a.

Accordingly, in the region 18, the linear conductor antenna 15 is arranged in a region opposing the opposing outer edge part 13a where the open end 24 of the slot 23 is provided. Hence, compared to a case in which the slot 23 is not provided in the conductive film 13, the effects of the conductive film 13 on the linear conductor antenna 15 can be reduced, and the deterioration of the antenna gain can be prevented.

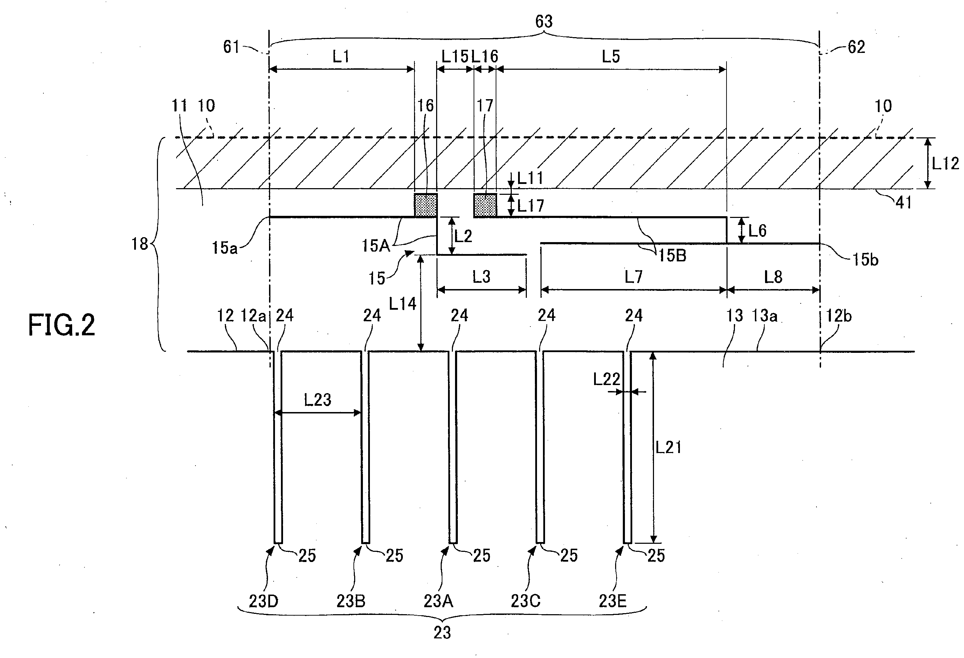

FIG. 2 is a plan view, on an enlarged scale, illustrating a part of the window glass 100 illustrated in FIG. 1, in a state in which the window glass 100 is mounted on a vehicle. The window glass 100 is mounted on a vehicle opening edge 41 so that the glass edge 10 of the glass plate 11 overlaps the vehicle opening edge 41. The vehicle opening edge 41 is a vehicle part where the window glass 100 is mounted, and is a flange part of a window frame formed on the vehicle, for example.

In order for the linear conductor antenna 15 to effectively function as an antenna, when the window glass 100 is mounted on the vehicle opening edge 41, the linear conductor antenna 15 is preferably provided within the region sandwiched between the vehicle opening edge 41 and the film edge 12, within the region 18 that is sandwiched between the glass edge 10 and the film edge 12. FIG. 2 illustrates an example in which the electrodes 16 and 17 are also provided within the region sandwiched between the vehicle opening edge 41 and the film edge 12, when the window glass 100 is mounted on the vehicle opening edge 41.

From a viewpoint of improving the antenna gain, the linear conductor antenna 15 is preferably arranged in a vicinity of the vehicle opening edge 41 on a roof side of the vehicle. However, the linear conductor antenna 15 may be arranged in a vicinity of a vehicle opening edge at parts other than the roof side of the vehicle (for example, a vehicle opening edge on a pillar side, a vehicle opening edge on a chassis side, or the like).

In the case illustrated in FIG. 2, the linear conductor antenna 15 is an antenna formed by an antenna element 15A and an antenna element 15B. The antenna element 15A is a conductor conductively connected to the electrode 16, and the antenna element 15B is a conductor conductively connected to the electrode 17. In addition, in the case illustrated in FIG. 2, the electrodes 16 and 17 are arranged side by side in a direction parallel to a direction along the opposing outer edge part 13a, but a positional relationship of the electrodes 16 and 17 is not limited to this relationship.

The linear conductor antenna 15 includes, in a direction along the film edge 12, an antenna end 15a forming a first end part at one most distal end of the linear conductor antenna 15, and an antenna end 15b forming a second end part at the other most distal end of the linear conductor antenna 15. In the case illustrated in FIG. 2, the antenna end 15a is the end at the most distal end along a leftward direction of the antenna element 15A, and the antenna end 15b is the end at the most distal end along a rightward direction of the antenna element 15B.

The open end 24 is preferably located at the opposing outer edge part 13a within an area 63 sandwiched between a first imaginary line 61 and a second imaginary line 62. The first imaginary line 61 passes through the antenna end 15a and a point 12a that is located on the film edge 12 of the conductive film 13 and is a shortest distance from the antenna end 15a. The second imaginary line 62 passes through the antenna end 15b and a point 12b that is located on the film edge 12 of the conductive film 13 and is a shortest distance from the antenna end 15b. Because the open end 24 is provided at the opposing outer edge part 13a within the area 63 of the film edge 12, the effects of the conductive film 13 on the linear conductor antenna 15 can be reduced, and the deterioration of the antenna gain can be prevented. The imaginary lines 61 and 62 are lines that are virtually drawn.

The slot 23 is formed from the opposing outer edge part 13a towards the inner in-plane direction of the conductive film 13. The opposing outer edge part 13a is a part included on one side of the film edge 12 of the conductive film 13. In order to prevent the deterioration of the antenna gain, the slot 23 preferably includes a vertical slot part where the conductive film 13 is linearly removed or no conductive film is formed from the open end 24 to a tip end part 25 that closes within the conductive film 13. The slot 23 is preferably formed by a plurality of slots 23 having the open end 24 that opens at the opposing outer edge part 13a.

FIG. 2 illustrates an example in which five vertical slot parts 23A through 23E are provided. The vertical slot parts 23A through 23E are slots that have the open end 24 as end part thereof, and where the conductive film 13 is removed or not formed. The vertical slot parts 23A through 23E are preferably provided to extend in a direction (inner in-plane direction of the conductive film 13) away from the opposing outer edge part 13a (for example, arranged to be perpendicular with respect to the direction along the opposing outer edge part 13a), from the viewpoint of improving the antenna gain. In addition, the vertical slot parts 23A through 23E are preferably arranged parallel to each other, from the viewpoint of improving the antenna gain.

λ_{g} = k·λ₀ when a wavelength in air at a center frequency of a predetermined frequency band of radio waves received by the linear conductor antenna 15 is denoted by λ₀, and a shortening coefficient of wavelength by glass at a surface provided with the slot 23 is denoted by k. The shortening coefficient of wavelength by glass, k, is approximately 0.64 in a case in which the conductive film is formed on a single glass plate, for example, and is approximately 0.5 in a case in which the conductive film is formed on a surface in contact with an intermediate film of laminated glass having two glass plates that are laminated via the intermediate film. In this case, a spacing between the opposing outer edge part 13a and a most distant position on the slot 23 amongst positions on the slot 23 that are shortest distances from the opposing outer edge part 13a is preferably (1/10)·λ_{g} or greater, and more preferably (1/8)·λ_{g} or greater. The spacing between the opposing outer edge part 13a and the most distant position on the slot 23 amongst the positions on the slot 23 that are the shortest distances from the opposing outer edge part 13a, refers to a longest distance amongst the shortest distances of straight lines connecting all positions on the opposing outer edge part 13a to all positions on the slot 23. For example, the spacing corresponds to a length from the open end 24 to the tip end part 25 in the direction away from the opposing outer edge part 13a of the vertical slot parts 23A through 23E (in the case illustrated in FIG. 2, this length corresponds to a slot length L21). Accordingly, the deterioration of the antenna gain can be effectively prevented.

In addition, the spacing between the opposing outer edge part 13a and the most distant position on the slot 23 amongst the positions on the slot 23 that are the shortest distances from the opposing outer edge part 13a is preferably 30 mm or greater, and more preferably 40 mm or greater. In this case, the deterioration of the antenna gain can be effectively prevented. The spacing corresponds to the length of the vertical slot parts 23A through 23E.

Forms (shapes, dimension, or the like) of the linear conductor antenna 15 and the electrodes 16 and 18 may be set to satisfy required values of the antenna gain necessary to receive the radio waves of the predetermined frequency band by the linear conductor antenna 15. For example, in a case in which the frequency band to be received by the linear conductor antenna 15 is a digital terrestrial television broadcasting band of 470 MHz to 710 MHz, the linear conductor antenna 15 and the electrodes 16 and 17 are formed to suit the reception of the radio waves in the digital terrestrial television broadcasting band of 470 MHz to 710 MHz.

A longitudinal direction of the vertical slot parts 23A through 23E preferably matches, but does not necessarily have to match, the direction perpendicular with respect to the direction along the opposing outer edge part 13a, for example. An angle formed by the longitudinal direction of the vertical slot parts 23A through 23E with respect to the opposing outer edge part 13a may be 5° or greater and less than 90°. The angle formed by the longitudinal direction of the vertical slot parts 23A through 23E with respect to the opposing outer edge part 13a is preferably 45° or greater and 90° or less.

A mounting angle of the window glass with respect to the vehicle is preferably 15° to 90°, and more preferably 30° to 90°, with respect to a horizontal plane (ground plane), from the viewpoint of making easy impedance matching and obtaining improved radiation efficiency.

For example, in a case in which the electrode 17 is used as an electrode on a signal line side and the electrode 16 is used as an electrode on a ground line side, the electrode 17 is conductively connected to a signal line that is connected to a signal processing unit (for example, an amplifier, or the like) mounted on the vehicle side, and the electrode 16 is conductively connected to a ground line that is connected to a grounding part on the vehicle side. Examples of the grounding part on the vehicle side include a body ground, a ground of the signal processing unit to which the signal line that is connected to the electrode 17 is connected, or the like, for example. Of course, the electrode 17 may be used as the electrode on the ground line side, and the electrode 16 may be used as the electrode on the signal line side.

Reception signals of the radio waves received by the linear conductor antenna 15 are sent to the signal processing unit that is mounted on the vehicle, via a conductive member that is conductively connected to the pair of electrodes 16 and 17. A feeder line, such as an AV line, a coaxial cable, or the like is preferably used for the conductive member.

In a case in which the coaxial cable is used as the feeder line for the feeding to the linear conductor antenna 15 via the electrodes 16 and 17, an inner conductor of the coaxial cable is electrically connected to the electrode 17, and an outer conductor of the coaxial cable is electrically connected to the electrode 16, for example. In addition, a configuration which employs a connector for electrically connecting the conductive member, such as a conductor or the like connected to the signal processing unit, to the electrodes 16 and 17, may be implemented in the electrodes 16 and 17. By using the connector, it becomes possible to easily mount the inner conductor of the coaxial cable to the electrode 17 and to easily mount the outer conductor of the coaxial cable to the electrode 16. Furthermore, a projecting conductive member may be provided on the electrodes 16 and 17, and the projecting conductive member may be made to contact and engage the feeding part provided on the flange part of the vehicle to which the window glass 100 is mounted.

The shapes of the electrodes 16 and 17 and the spacing of the electrodes may be determined by taking into consideration the shape of the conductive member or the connector on a mounting surface, and the spacing of the conductive member or the connector on the mounting surface. For example, rectangular shapes and polygonal shapes of the electrodes 16 and 17 are preferable from the viewpoint of mounting ease. The rectangular shapes include squares, approximate squares, rectangles, approximate rectangles, or the like. Of course, the electrodes 16 and 17 may have circular shapes, such as a circle, an approximate circle, an oval, an approximate oval, or the like.

In addition, the linear conductor antenna 15 and the electrodes 16 and 17 may be formed by printing and baking a paste that includes a conductive metal, such as a silver paste or the like, for example, on the surface of the glass plate 11 on the vehicle side, however, the method of forming is not limited to this method. A linear body or a film body made of a conductive material, such as copper or the like, may be formed on the surface of the glass plate 11 on the vehicle side, and the linear or film body may be adhered on the glass plate 11 by an adhesive or the like.

Moreover, a concealing film may be formed on the surface of the glass plate 11, between the glass plate 11 and the electrodes 16 and 17, in order to conceal the electrodes 16 and 17 from the outside of the vehicle. The concealing film may formed by ceramics that are sintered materials, such as a black ceramic film or the like. In this case, when viewed from outside the vehicle, the electrodes 16 and 17 and a part of the linear conductor antenna 15 that are provided on the concealing film are concealed from the outside of the vehicle by the concealing film, to thereby provide a superior design for the window glass.

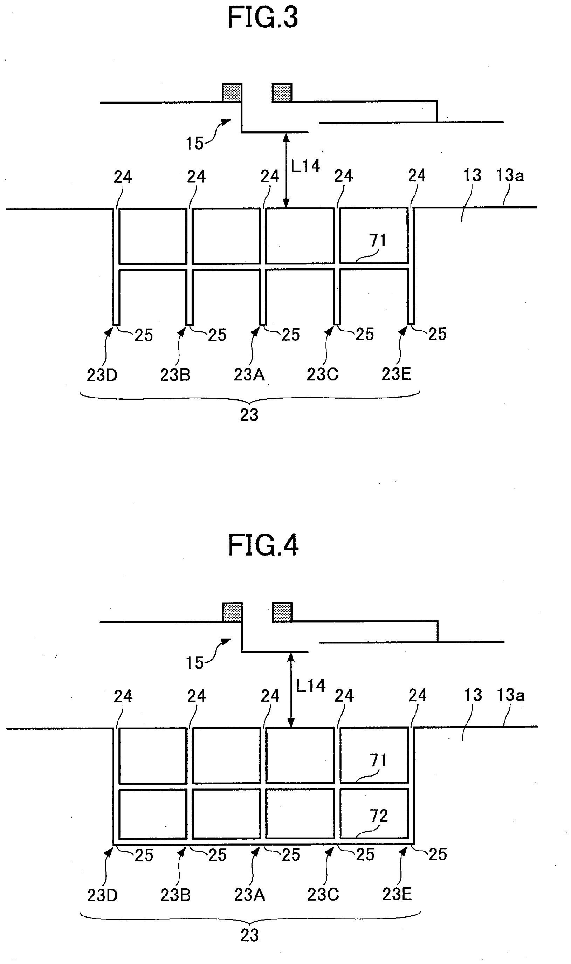

FIGs. 3 through 7 illustrate variations of the conductive film 13 formed with other examples of the slots. The deterioration of the antenna gain can also be prevented according to these other examples of the slots.

In a case illustrated in FIG. 3, the slot 23 of the conductive film 13 includes a plurality of vertical slot parts formed by main slot parts extending from an end part thereof, from the open end 24 in the direction away from the opposing outer edge part 13a, and a horizontal slot part 71 formed by a sub slot connecting to the vertical slot parts and having no open end. The horizontal slot 71 intersects the vertical slot part 23D and the vertical slot part 23E in a T-shape at end parts thereof, and intersects intermediate parts of the vertical slot parts 23A, 23B, and 23C in a cross-shape at intermediate parts thereof. The horizontal slot part 71 is formed in the conductive film 13 to become parallel to the opposing outer edge part 13a. One or a plurality of horizontal slot parts 71 may be provided.

In a case illustrated in FIG. 4, the slot 23 of the conductive film 13 includes a plurality of vertical slot parts formed by main slot parts extending from the end part thereof, from the open end 24 in the direction away from the opposing outer edge part 13a, and a plurality of horizontal slot parts 71 and 72 formed by sub slots connecting to the vertical slot parts and having no open end. In this example, the horizontal slot part 72 is added with respect to the example of FIG. 3, and the horizontal slot part 72 intersects the tip end part 25 of the vertical slot parts 23D and 23E at end parts thereof. The horizontal slot part 72 is formed in the conductive film 13 to become parallel to the opposing outer edge part 13a.

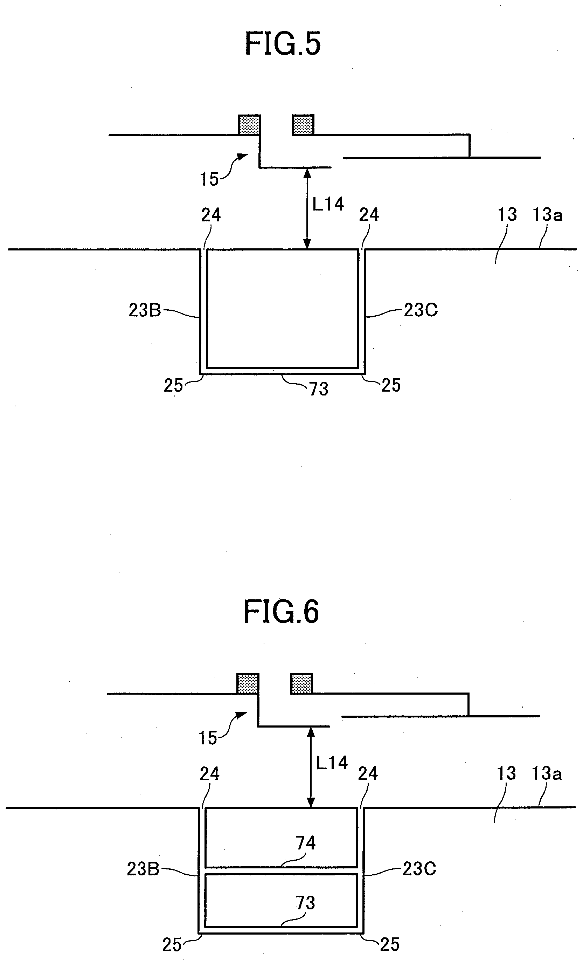

In a case illustrated in FIG. 5, the slot of the conductive film 13 includes two vertical slot parts formed by main slot parts extending from the end part thereof, from the open end 24 in the direction away from the opposing outer edge part 13a, and one horizontal slot part 73 formed by a sub slot connecting to the vertical slot parts and having no open end. The slot forms a single continuous slot from one open end 24 to the other open end 24, by the two vertical slot parts and the one horizontal slot part. The horizontal slot part 73 intersects the tip end parts 25 of the vertical slot parts 23B and 23C at the end parts thereof. The horizontal slot part 73 is formed in the conductive film 13 to become parallel to the opposing outer edge part 13a.

In a case illustrated in FIG. 6, the slot of the conductive film 13 includes two vertical slot parts formed by main slot parts extending from the end part thereof, from the open end 24 in the direction away from the opposing outer edge part 13a, and a plurality of horizontal slot parts 73 and 74 formed by sub slots connecting to the vertical slot parts and having no open end. In this example, the horizontal slot part 74 is added with respect to the examine of FIG. 5, and the horizontal slot part 74 intersects the intermediate parts of the vertical slot parts 23B and 23C at the end parts thereof. The horizontal slot part 74 is formed in the conductive film 13 to become parallel to the opposing outer edge part 13a. One or a plurality of horizontal slot parts 74 may be provided.

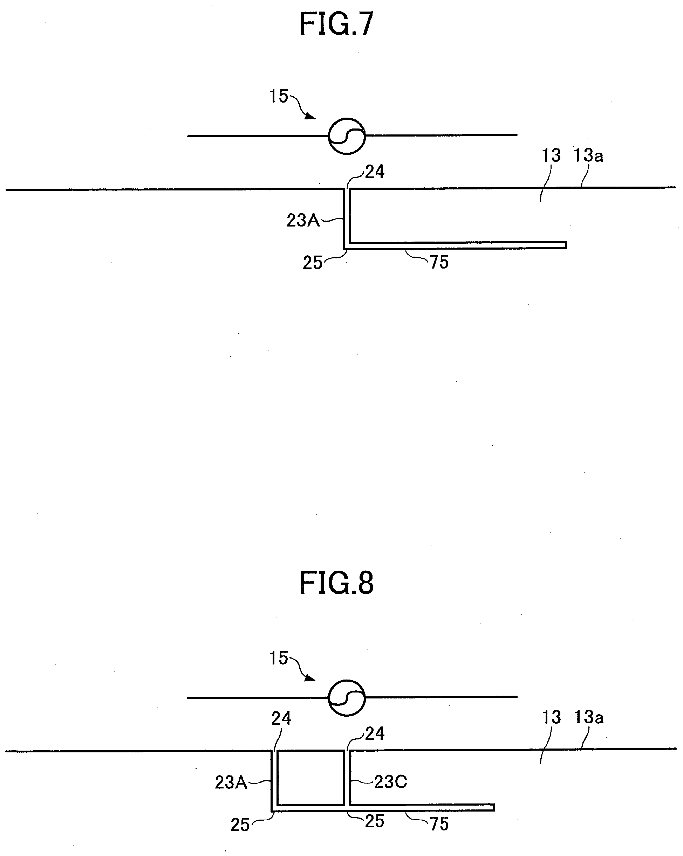

In a case illustrated in FIG. 7, the slot of the conductive film 13 includes one vertical slot part formed by main slot part extending from the end part thereof, from the open end 24 in the direction away from the opposing outer edge part 13a, and one horizontal slot part 75 formed by a sub slot connecting to the vertical slot part and having no open end. The horizontal slot part 75 intersects the tip end part 25 of the vertical slot part 23A at one end part thereof. The horizontal slot part 75 is formed in the conductive film 13 to become parallel to the opposing outer edge part 13a. In other words, the conductive film 13 in this case is provided with an L-shaped slop having the open end 24. Hence, a height of the slot can be shortened, and the slot length in the inner in-plane direction of the conductive film 13 can be reduced, to thereby improve an appearance of the window glass.

In a case illustrated in FIG. 8, the slot of the conductive film 13 includes a plurality of vertical slot parts formed by main slot parts extending from the end part thereof, from the open end 24 in the direction away from the opposing outer edge part 13a, and one horizontal slot part 75 formed by a sub slot connecting to the vertical slot parts and having no open end. The horizontal slot part 75 intersects the tip end part 25 of the vertical slot part 23A at one end part thereof, and intersects the tip end part 25 of the vertical slot part 23C at an intermediate part thereof. In other words, the conductive film 13 in this case is provided with an F-shaped slot having the open end 24. Hence, the spacing between the opposing outer edge part 13a and the most distant position on the slot amongst the positions on the slot that are the shortest distances from the opposing outer edge part 13a, that is, the length of the vertical slot part in the inner in-plane direction, can be reduced, to thereby improve the appearance of the window glass.

The slot is not limited to the L-shaped slot and the F-shaped slot, and the antenna gain and the appearance of the window glass can be improved by a meander-shaped slot, for example.

The window glass for vehicle provided with the linear conductor antenna is described in the embodiments described above, but the present invention is not limited to these embodiments. Various variations and modifications, such as combinations or substitutions of other embodiments in part or in their entirety may be made without departing from the scope of the present invention.

For example, although the linear conductor antenna 15 illustrated in FIGs. 1 and 2 is a dipole antenna having the two electrodes 16 and 17 as the feeding parts, the above described arrangement can increase the antenna gain even in the case of a monopole antenna. In addition, the linear conductor antenna 15 illustrated in FIGs. 1 and 2 is merely one example, and the above described arrangement can increase the antenna gain even in the case of the linear conductor antenna of other embodiments.

In addition, the antenna conductor may be other than the linear conductor 15, and may be a band-shaped conductor (hereinafter also referred to as a band-shaped conductor antenna) formed by a conductive film having a width wider than a line width, similarly as in the case of the conductive film 13. The material used for the conductive film forming the band-shaped conductor antenna may be the same as that of the conductive film 13. In this case, an improved productivity can be achieved because the band-shaped conductor antenna can be formed on the window glass 100 at the same time as the conductive film 13.

Further, the antenna conductor may be positioned on the outer in-plane direction (outward direction) than the film edge 12 of the conductive film 13, instead of on the window glass 100. More particularly, in a case in which the vehicle part where the window glass 100 is set is a resin panel such as a resin hatchback, the antenna conductor may be provided on the resin panel close to the window glass 100. In addition, the antenna conductor may be provided on a resin spoiler. Moreover, the antenna conductor may be provided on the roof of the vehicle on the side closer to the window glass 100. In the case in which the antenna conductor is provided on the roof of the vehicle, the antenna conductor may be a pole antenna. Even in such an example of the conductor antenna, the deterioration of the antenna gain can be prevented by the above described arrangement.

In addition, the conductive film 13 may include an independent slot part that is provided in a vicinity of the slot having the open end but does not connect to the slot. The independent slot part is a slot that does not have the open end that opens at the film edge 12 of the conductive film 13, and is a slot that is closed within the conductive film 13.

### Exemplary Implementations

Measured results of antenna gains for various slots of the linear conductor antenna 15 mounted on the windshield at the front of the actual vehicle will be illustrated.

The antenna gain was measured by assembling a window glass for automobile formed with the linear conductor antenna 15 on the window frame of the automobile on a turntable, in a state in which the linear conductor antenna part is inclined by approximately 25° with respect to the horizontal plane. The connector was mounted so that the inner conductor of the coaxial cable is connected to the electrode 17, the outer conductor of the coaxial cable is connected to the electrode 16, and the electrodes 16 and 17 are connected to a network analyzer via the coaxial cable. The turntable was rotated so that the radio waves are irradiated on the window glass from all horizontal directions.

The antenna gain was measured by setting a vehicle center of the automobile on which the window glass for automobile formed with the linear conductor antenna 15 to a center of the turntable, and rotating the automobile 360°. Data of the antenna gain was measured for every rotating angle of 5°, and for every 6 MHz in the frequency range of the digital terrestrial television broadcasting band of 470 MHz to 710 MHz. A wave angle between a radio wave transmitting position and the antenna conductor was measured approximately in the horizontal direction (a direction in which (wave angle)=0° in a case in which a plane parallel to the ground plane is regarded as (wave angle)=0°, and a zenith direction is regarded as (wave angle)=90°). The antenna gain was normalized with reference to a half-wavelength dipole antenna, so that the antenna gain of the half-wavelength dipole antenna becomes 0dB.

### <Measurement Example 1>

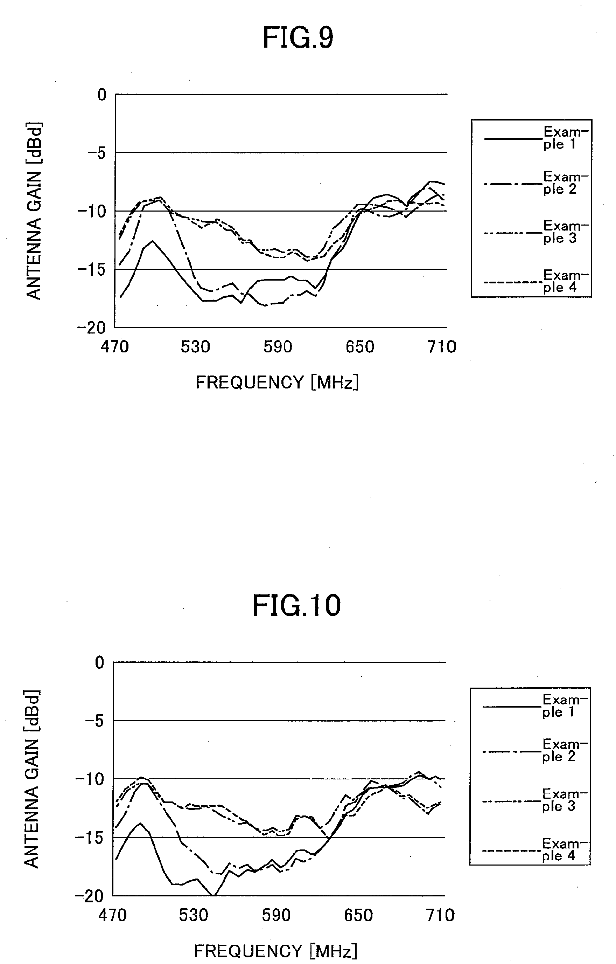

FIG. 9 illustrates measured data of the antenna gain for the various slots of the linear conductor antenna 15, when horizontally polarized waves are irradiated thereon. FIG. 10 illustrates the measured data of the antenna gain for the various slots of the linear conductor antenna 15, when vertically polarized waves are irradiated thereon. "Example 1" represents an example in which the slot 23 is not formed in the conductive film 13 in FIG. 2. "Example 2" represents an exemplary implementation in which only one vertical slot part 23A is formed in the conductive film 13 in FIG. 2. "Example 3" represents an exemplary implementation in which only a total of three vertical slot parts 23A through 23C are formed in the conductive film 13 in FIG. 2. "Example 4" represents an exemplary implementation in which a total of five vertical slot parts 23A through 23E are formed in the conductive film 13 in FIG. 2.

In the frequency range of 470 MHz to 710 MHz illustrated in FIGs. 9 and 10, an average value of the antenna gains measured for every 6 MHz, in units of dBd, was measured as illustrated in Table 1.

**Table 1**

| | Horizontal Polarization | Vertical Polarization |
|---|---|---|
| Example 1 | -12.2 | -13.8 |
| Example 2 | -12.0 | -13.0 |
| Example 3 | -10.7 | -12.3 |
| Example 4 | -10.9 | -12.4 |

Accordingly, in the case of both horizontal polarization and vertical polarization, it was confirmed that the deterioration of the antenna gain can be suppressed by providing the slot as in the exemplary implementations of the present invention, when compared to the example provided with no slot. For example, in the case of the vertical polarization, the antenna gain increases by 0.8 dB by adding one slot.

In FIGs. 9 and 10, the dimensions of each of the parts in FIGs. 1 and 2 when measuring the antenna gain are as follows, where the unit is in mm. A sheet resistance of the conductive film 13 is 1.0 [Ω].

| | |
|---|---|
| L1: | 80 |
| L2: | 20 |
| L3: | 50 |
| L5: | 125 |
| L6: | 15 |
| L7: | 100 |
| L8: | 50 |
| L11: | 1 |
| L12: | 21 |
| L14: | 48 |
| L15: | 18 |
| L16 (For both electrodes 16 and 17): | 12.5 |
| L17 (For both electrodes 16 and 17): | 11 |
| L21 (Slot length of each vertical slot part): | 100 |
| L22 (Slot width of each vertical slot part): | 3 |
| L23 (Pitch between each of verticalslot parts): | 50 |
| L51: | 1166 |
| L52: | 1104 |
| L55: | 1285 |
| L56: | 1402 |
| L57: | 802 |
| L58: | 693 |
| L59: | 650 |
| L60: | 757 |

### <Measurement Example 2>

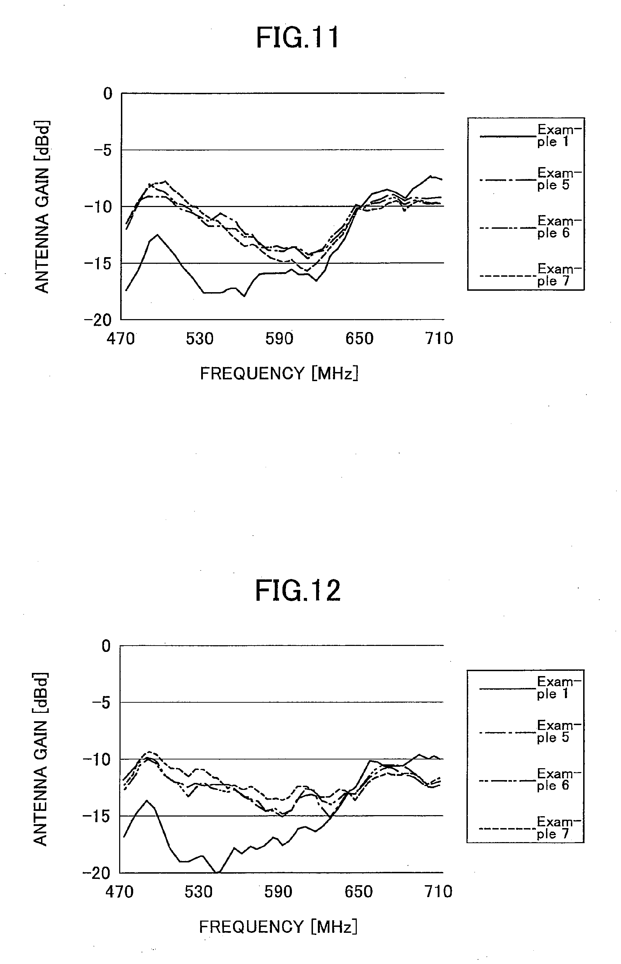

FIG. 11 illustrates measured data of the antenna gain for the various slots of the linear conductor antenna 15, when the horizontally polarized waves are irradiated thereon. FIG. 12 illustrates the measured data of the antenna gain for the various slots of the linear conductor antenna 15, when the vertically polarized waves are irradiated thereon. "Example 1" represents the example in which the slot 23 is not formed in the conductive film 13 in FIG. 2. "Example 5" represents an exemplary implementation in which a total of five vertical slot parts 23A through 23E are formed in the conductive film 13 in FIG. 2. "Example 6" represents an exemplary implementation in which only a total of five vertical slot parts 23A through 23E and one horizontal slot part 71 are formed in the conductive film 13 in FIG. 3. "Example 7" represents an exemplary implementation in which a total of five vertical slot parts 23A through 23E and a total of two horizontal slot parts 71 and 72 are formed in the conductive film 13 in FIG. 4.

In the frequency range of 470 MHz to 710 MHz illustrated in FIGs. 11 and 12, an average value of the antenna gains measured for every 6 MHz, in units of dBd, was measured as illustrated in Table 2.

**Table 2**

| | Horizontal Polarization | Vertical Polarization |
|---|---|---|
| Example 1 | -12.2 | -13.8 |
| Example 5 | -10.9 | -12.4 |
| Example 6 | -10.9 | -12.4 |
| Example 7 | -11.0 | -11.9 |

Accordingly, in the case of the vertical polarization, it was confirmed that the deterioration of the antenna gain can be prevented by providing the horizontal slot part as in the exemplary implementations of the present invention, when compared to the example provided with no horizontal slot part. For example, in the case of the vertical polarization, the antenna gain increases by 0.5 dB by adding the horizontal slot parts 71 and 72.

In FIGs. 11 and 12, the dimensions of each of the parts in FIGs. 3 and 4 when measuring the antenna gain are the same as each of the parts in common with FIGs. 1 and 2, as in the case of the <Measurement Example 1> described above. The horizontal slot part 71 in FIGs. 3 and 4 is the slot passing through a midpoint of each of the vertical slot parts 23A through 23E. The horizontal slot part 72 in FIG. 4 is the slot passing through the tip end part 25 of each of the vertical slot parts 23A through 23E.

### <Measurement Example 3>

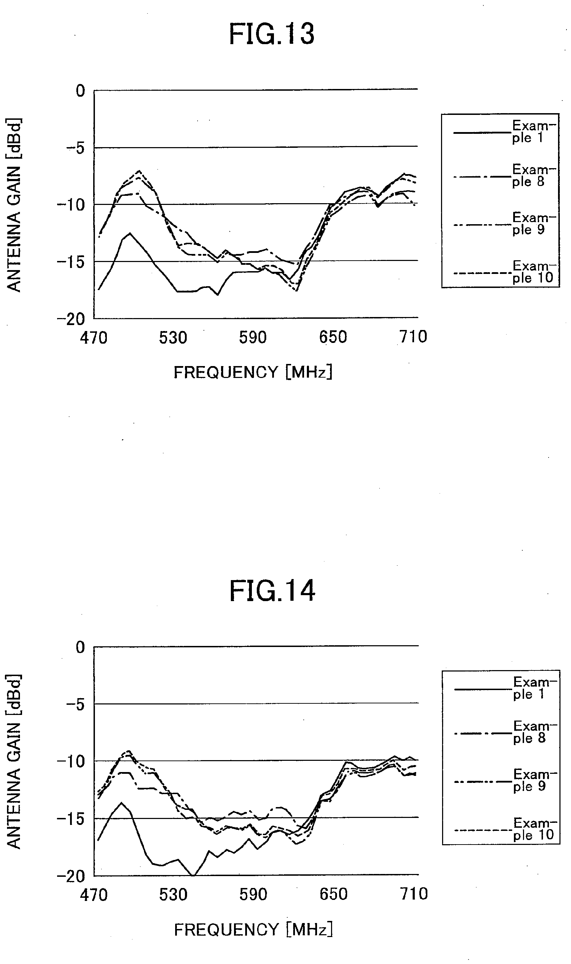

FIG. 13 illustrates measured data of the antenna gain for the various slots of the linear conductor antenna 15, when the horizontally polarized waves are irradiated thereon. FIG. 14 illustrates the measured data of the antenna gain for the various slots of the linear conductor antenna 15, when the vertically polarized waves are irradiated thereon. "Example 1" represents the example in which the slot 23 is not formed in the conductive film 13 in FIG. 2. "Example 8" represents an exemplary implementation in which only a total of two vertical slot parts 23B and 23C are formed in the conductive film 13 in FIG. 2. "Example 9" represents an exemplary implementation in which only a total of three slot parts, including the vertical slot parts 23B and 23C and the horizontal slot part 73, are formed in the conductive film 13 in FIG. 5. "Example 10" represents an exemplary implementation in which a total of four slot parts, including the vertical slot parts 23B and 23C and the horizontal slot parts 73 and 74 are formed in the conductive film 13 in FIG. 6.

In the frequency range of 470 MHz to 710 MHz illustrated in FIGs. 13 and 14, an average value of the antenna gains measured for every 6 MHz, in units of dBd, was measured as illustrated in Table 3.

**Table 3**

| | Horizontal Polarization | Vertical Polarization |
|---|---|---|
| Example 1 | -12.2 | -13.8 |
| Example 8 | -11.2 | -12.8 |
| Example 9 | -11.4 | -12.8 |
| Example 10 | -10.8 | -12.5 |

Accordingly, in the case of both the horizontal polarization and the vertical polarization, it was confirmed that the deterioration of the antenna gain can be prevented by providing the horizontal slot part as in the exemplary implementations of the present invention, when compared to the example provided with no horizontal slot part. For example, in the case of the horizontal polarization, the antenna gain increases by 0.4 dB by adding two horizontal slot parts 73 and 74.

In FIGs. 13 and 14, the dimensions of each of the parts in FIGs. 5 and 6 when measuring the antenna gain are the same as each of the parts in common with FIGs. 1 and 2, as in the case of the <Measurement Example 1> described above. The horizontal slot part 73 in FIGs. 5 and 6 is the slot passing through the tip end part 25 of each of the vertical slot parts 23B and 23C. The horizontal slot part 74 in FIG. 6 is the slot passing through the midpoint of each of the vertical slot parts 23B and 23C.

### INDUSTRIAL APPLICABILITY

The present invention is suitably applicable for use as an antenna for automobile, designed to receive the digital terrestrial television broadcasting, the analog television broadcasting in UHF band, the digital television broadcasting in the United States of America, the digital television broadcasting in the European Union regions, or the digital television broadcasting in the People's Republic of China. Other applications include the FM broadcasting band (76 MHz to 90 MHz) in Japan, FM broadcasting band (88 MHz to 108 MHz) in the United States of America, the television VHF band (90 MHz to 108 MHz, 170 MHz to 222 MHz), and a keyless entry system for automobile (300 MHz to 450MHz).

Additional applications include the 800 MHz band (810 MHz to 960 MHz) for car phone, the 1.5 GHz band (1.429 GHz to 1.501 GHz) for car phone, the GPS (Global Positioning System), the GPS signals of satellite (1575.42 MHz), and the VICS (registered trademark) (Vehicle Information and Communication System: 2.5 GHz).

Further applications include the ETC (Electronic Toll Collection System) communication (non-stop automatic toll collection system, transmission frequency of roadside radio device: 5.795 GHz or 5.805 GHz, reception frequency of roadside radio device: 5.835 GHz or 5.845 GHz), the DSRC (Dedicated Short Range Communication, 915 MHz band, 5.8 GHz band, 60 GHz band), and the microwave (1 GHz to 30 GHz), the millimeter wave (30 GHz to 300 GHz), and the SDARS (Satellite Digital Audio Radio Service, 2.34 GHz, 2.6 GHz) communications.

### DESCRIPTION OF REFERENCE NUMERALS

- 10: Glass edge
- 11: Glass plate
- 12: Film edge
- 13: Conductive film
- 13a: Opposing outer edge part
- 15: Linear conductor antenna
- 15A, 15B: Antenna element
- 15a, 15b: Antenna end
- 16, 17: Electrode
- 18: Region
- 23: Slot
- 24: Open end
- 25: Tip end part
- 41: Vehicle opening edge
- 61, 62: Imaginary line
- 63: Area
- 71, 72, 73, 74, 75: Horizontal slot part
- 100: Window glass

## Claims

1. Window glass (100) for vehicle comprising a glass plate (11), an antenna conductor (15) and a conductive film (13) provided on the glass plate (11), **characterized in that**:
the conductive film (13) includes a slot (23),
the slot (23) has a plurality of vertical slot parts (23A, 23B, 23C, 23D, 23E) having an open end (24) that opens at an opposing outer edge part (13a) at an upper part of the conductive film (13), opposing the antenna conductor (15) located on an outer side of an outer film edge of the conductive film (13),
the plurality of vertical slot parts (23A, 23B, 23C, 23D, 23E) extending in a direction away from the opposing outer edge part (13a), and
the antenna conductor (15) is formed between a glass edge (10) and the open end (24) that opens at the opposing outer edge part (13a) of the conductive film (13) at an upper part of the window glass (100) for vehicle.

2. The window glass (100) for vehicle as claimed in claim 1, wherein the antenna conductor (15) is provided within a region (18) of the glass plate (11) between an outer glass edge (10) of the glass plate (11) and the outer film edge of the conductive film (13).

3. The window glass (100) for vehicle as claimed in claim 1 or 2, wherein the antenna conductor (15) is formed by a linear conductor.

4. The window glass (100) for vehicle as claimed in claim 1 or 2, wherein the antenna conductor (15) is formed by a band-shaped conductor.

5. The window glass (100) for vehicle as claimed in any of claims 1 to 4, wherein the open end (24) is located at the opposing outer edge part (13a) within an area (63) sandwiched between a first imaginary line (61) and a second imaginary line (62), wherein the first imaginary line (61) passes through a first end part at one most distal end of the antenna conductor (15) and a point that is located on the outer film edge of the conductive film (13) and is a shortest distance from the first end part, and wherein the second imaginary line (62) passes through a second end part at an other most distal end of the antenna conductor (15) and a point that is located on the outer film edge of the conductive film (13) and is a shortest distance from the second end part.

6. The window glass (100) for vehicle as claimed in any of claims 1 to 5, wherein the vertical slot parts (23A, 23B, 23C, 23D, 23E) are arranged parallel to each other.

7. The window glass (100) for vehicle as claimed in any of claims 1 to 6, wherein λ_{g} = k·λ₀ when a wavelength in air at a center frequency of a predetermined frequency band of radio waves received by the antenna conductor (15) is denoted by λ₀, and a shortening coefficient of wavelength by glass at a surface provided with the slot (23) is denoted by k, and
wherein a spacing between the opposing outer edge part (13a) and a most distant position on the slot (23) amongst positions on the slot (23) that are shortest distances from the opposing outer edge part (13a) is (1/10)·λ_{g} or greater.

8. The window glass (100) for vehicle as claimed in any of claims 1 to 6, wherein a spacing between the opposing outer edge part (13a) and a most distant position on the slot (23) amongst positions on the slot (23) that are shortest distances from the opposing outer edge part (13a) is 30 mm or greater.

9. The window glass (100) for vehicle as claimed in any of claims 1 to 8, wherein each of the vertical slot parts (23A, 23B, 23C, 23D, 23E) forms a main slot part, and the slot (23) includes a sub slot part (71, 72, 73, 74, 75) connected to adjacent main slot parts and having no open end (24).

10. The window glass (100) for vehicle as claimed in any of claims 1 to 9, wherein the conductive film (13) includes an independent slot part that is provided in a vicinity of the slot (23) not connecting to the slot (23).

11. The window glass (100) for vehicle as claimed in any of claims 1 to 10, wherein an angle formed by a longitudinal direction of the plurality of vertical slot parts (23A, 23B, 23C, 23D, 23E) with respect to the opposing outer edge part (13a) is 45° or greater and 90° or less.

12. The window glass (100) for vehicle as claimed in claim 11, wherein the longitudinal direction of the plurality of vertical slot parts (23A, 23B, 23C, 23D, 23E) is perpendicular with respect to a direction along the opposing outer edge part (13a).

## Patentansprüche

1. Fensterglas (100) für ein Fahrzeug, umfassend eine Glasplatte (11), einen Antennenleiter (15) und einen leitfähigen Film (13), bereitgestellt auf der Glasplatte (11), **dadurch gekennzeichnet, dass**:
der leitfähige Film (13) einen Schlitz (23) einschließt,
wobei der Schlitz (23) eine Mehrzahl von vertikalen Schlitzteilen (23A, 23B, 23C, 23D, 23E) mit einem offenen Ende (24), welches sich an einem gegenüberstehenden äußeren Kantenteil (13a) in einem oberen Teil des leitfähigen Films (13) öffnet, gegenüberstehend dem Antennenleiter (15), befindlich an einer äußeren Seite einer äußeren Filmkante des leitfähigen Films (13), aufweist, sich die Mehrzahl von vertikalen Schlitzteilen (23A, 23B, 23C, 23D, 23E) in einer Richtung, weg von dem gegenüberstehenden äußeren Kantenteil (13a) erstreckt und
der Antennenleiter (15) zwischen einer Glaskante (10) und dem offenen Ende (24), welches sich an dem gegenüberstehenden äußeren Kantenteil (13a) des leitfähigen Films (13) in einem oberen Teil des Fensterglases (100) für ein Fahrzeug öffnet, gebildet ist.

2. Fensterglas für ein Fahrzeug nach Anspruch 1, wobei der Antennenleiter (15) in einem Bereich (18) der Glasplatte (11) zwischen einer äußeren Glaskante (10) der Glasplatte (11) und der äußeren Filmkante des leitfähigen Films (13) bereitgestellt ist.

3. Fensterglas (100) für ein Fahrzeug nach Anspruch 1 oder 2, wobei der Antennenleiter (15) durch einen linearen Leiter gebildet ist.

4. Fensterglas (100) für ein Fahrzeug nach Anspruch 1 oder 2, wobei der Antennenleiter (15) durch einen bandförmigen Leiter gebildet ist.

5. Fensterglas (100) für ein Fahrzeug nach einem der Ansprüche 1 bis 4, wobei sich das offene Ende (24) an dem gegenüberstehenden äußeren Kantenteil (13a) befindet, innerhalb eines Bereichs (63), eingeschoben zwischen einer ersten imaginären Linie (61) und einer zweiten imaginären Linie (62), wobei die erste imaginäre Linie (61) durch einen ersten Endteil an einem distalsten Ende des Antennenleiters (15) und einen Punkt, welcher sich an der äußeren Filmkante des leitfähigen Films (13) befindet, verläuft und eine kürzeste Distanz von dem ersten Endteil darstellt, und wobei die zweite imaginäre Linie (62) durch einen zweiten Endteil an einem anderen distalsten Ende des Antennenleiters (15) und einen Punkt, welcher sich an der äußeren Filmkante des leitfähigen Films (13) befindet, verläuft und eine kürzeste Distanz von dem zweiten Endteil darstellt.

6. Fensterglas (100) für ein Fahrzeug nach einem der Ansprüche 1 bis 5, wobei die vertikalen Schlitzteile (23A, 23B, 23C, 23D, 23E) parallel zueinander angeordnet sind.

7. Fensterglas (100) für ein Fahrzeug nach einem der Ansprüche 1 bis 6, wobei λ_{g} = k·λ₀, wenn eine Wellenlänge in Luft bei einer Zentralfrequenz eines vorbestimmten Frequenzbereichs von Radiowellen, empfangen von dem Antennenleiter (15), als λ₀ angegeben wird und ein Wellenlängenverkürzungskoeffizient durch Glas an einer Oberfläche, bereitgestellt mit dem Schlitz (23), als k angegeben wird, und
wobei eine Beabstandung zwischen dem gegenüberstehenden äußeren Kantenteil (13a) und einer am weitesten entfernten Position auf dem Schlitz (23) unter Positionen auf dem Schlitz (23), welche kürzeste Distanzen von dem gegenüberstehenden äußeren Kantenteil (13a) sind, (1/10)·λ_{g} oder mehr beträgt.

8. Fensterglas (100) für ein Fahrzeug nach einem der Ansprüche 1 bis 6, wobei eine Beabstandung zwischen dem gegenüberstehenden äußeren Kantenteil (13a) und einer am weitesten entfernten Position auf dem Schlitz (23) unter Positionen auf dem Schlitz (23), welche kürzeste Distanzen von dem gegenüberstehenden äußeren Kantenteil (13a) sind, 30 mm oder mehr beträgt.

9. Fensterglas (100) für ein Fahrzeug nach einem der Ansprüche 1 bis 8, wobei jeder der vertikalen Schlitzteile (23A, 23B, 23C, 23D, 23E) einen Hauptschlitzteil bildet und der Schlitz (23) einen Unterschlitzteil (71, 72, 73, 74, 75), verbunden mit benachbarten Hauptschlitzteilen und ohne offenes Ende (24), einschließt.

10. Fensterglas (100) für ein Fahrzeug nach einem der Ansprüche 1 bis 9, wobei der leitfähige Film (13) einen unabhängigen Schlitzteil einschließt, welcher in einer Nachbarschaft des Schlitzes (23), nicht verbunden mit dem Schlitz (23), bereitgestellt ist.

11. Fensterglas (100) für ein Fahrzeug nach einem der Ansprüche 1 bis 10, wobei ein Winkel, gebildet durch eine longitudinale Richtung der Mehrzahl von vertikalen Schlitzteilen (23A, 23B, 23C, 23D, 23E) in Bezug auf den gegenüberstehenden äußeren Kantenteil (13a), 45° oder mehr und 90° oder weniger beträgt.

12. Fensterglas (100) für ein Fahrzeug nach Anspruch 11, wobei die longitudinale Richtung der Mehrzahl von vertikalen Schlitzteilen (23A, 23B, 23C, 23D, 23E) senkrecht in Bezug auf eine Richtung entlang des gegenüberstehenden äußeren Kantenteils (13a) ist.

## Revendications

1. Vitre (100) pour véhicule comprenant une plaque de verre (11), un conducteur d'antenne (15) et un film conducteur (13) prévu sur la plaque de verre (11), **caractérisée en ce que** :
le film conducteur (13) inclut une fente (23),
la fente (23) a une pluralité de parties de fente verticales (23A, 23B, 23C, 23D, 23E) ayant une extrémité ouverte (24) qui s'ouvre au niveau d'une partie de bord externe opposée (13a) au niveau d'une partie supérieure du film conducteur (13), opposée au conducteur d'antenne (15) situé sur un côté externe d'un bord de film externe du film conducteur (13),
la pluralité de parties de fente verticales (23A, 23B, 23C, 23D, 23E) s'étendant dans une direction à l'écart de la partie de bord externe opposée (13a), et
le conducteur d'antenne (15) est formé entre un bord de verre (10) et l'extrémité ouverte (24) qui s'ouvre au niveau de la partie de bord externe opposée (13a) du film conducteur (13) au niveau d'une partie supérieure de la vitre (100) pour véhicule.

2. Vitre (100) pour véhicule selon la revendication 1, dans laquelle le conducteur d'antenne (15) est prévu au sein d'une région (18) de la plaque de verre (11) entre un bord de verre externe (10) de la plaque de verre (11) et le bord de film externe du film conducteur (13).

3. Vitre (100) pour véhicule selon la revendication 1 ou 2, dans laquelle le conducteur d'antenne (15) est formé par un conducteur linéaire.

4. Vitre (100) pour véhicule selon la revendication 1 ou 2, dans laquelle le conducteur d'antenne (15) est formé par un conducteur en forme de bande.

5. Vitre (100) pour véhicule selon l'une quelconque des revendications 1 à 4, dans laquelle l'extrémité ouverte (24) est située au niveau de la partie de bord externe opposée (13a) au sein d'une zone (63) prise en sandwich entre une première ligne imaginaire (61) et une seconde ligne imaginaire (62), dans laquelle la première ligne imaginaire (61) passe à travers une première partie d'extrémité à une extrémité la plus distale du conducteur d'antenne (15) et un point qui est situé sur le bord de film externe du film conducteur (13) et est à une distance la plus courte de la première partie d'extrémité, et dans laquelle la seconde ligne imaginaire (62) passe à travers une seconde partie d'extrémité à une autre extrémité la plus distale du conducteur d'antenne (15) et un point qui est situé sur le bord de film externe du film conducteur (13) et est à une distance la plus courte de la seconde partie d'extrémité.

6. Vitre (100) pour véhicule selon l'une quelconque des revendications 1 à 5, dans laquelle les parties de fente verticales (23A, 23B, 23C, 23D, 23E) sont agencées parallèlement l'une à l'autre.

7. Vitre (100) pour véhicule selon l'une quelconque des revendications 1 à 6, dans laquelle λ_{g} = k·λ₀ lorsqu'une longueur d'onde dans l'air à une fréquence centrale d'une bande de fréquences prédéterminée d'ondes radio reçues par le conducteur d'antenne (15) est désignée par λ₀, et un coefficient de raccourcissement de longueur d'onde par du verre au niveau d'une surface pourvue de la fente (23) est désigné par k, et
dans laquelle un espacement entre la partie de bord externe opposée (13a) et une position la plus distante sur la fente (23) parmi des positions sur la fente (23) qui sont à des distances les plus courtes de la partie de bord externe opposée (13a) est de (1/10)·λ_{g} ou supérieur.

8. Vitre (100) pour véhicule selon l'une quelconque des revendications 1 à 6, dans laquelle un espacement entre la partie de bord externe opposée (13a) et une position la plus distante sur la fente (23) parmi des positions sur la fente (23) qui sont à des distances les plus courtes de la partie de bord externe opposée (13a) est de 30 mm ou supérieur.

9. Vitre (100) pour véhicule selon l'une quelconque des revendications 1 à 8, dans laquelle chacune des parties de fente verticales (23A, 23B, 23C, 23D, 23E) forme une partie de fente principale, et la fente (23) inclut une partie de fente secondaire (71, 72, 73, 74, 75) connectée à des parties de fente principales adjacentes et n'ayant aucune extrémité ouverte (24).

10. Vitre (100) pour véhicule selon l'une quelconque des revendications 1 à 9, dans laquelle le film conducteur (13) inclut une partie de fente indépendante qui est prévue à une proximité de la fente (23) ne se connectant pas à la fente (23).

11. Vitre (100) pour véhicule selon l'une quelconque des revendications 1 à 10, dans laquelle un angle formé par une direction longitudinale de la pluralité de parties de fente verticales (23A, 23B, 23C, 23D, 23E) par rapport à la partie de bord externe opposée (13a) est de 45° ou supérieur et 90° ou inférieur.

12. Vitre (100) pour véhicule selon la revendication 11, dans laquelle la direction longitudinale de la pluralité de parties de fente verticales (23A, 23B, 23C, 23D, 23E) est perpendiculaire par rapport à une direction le long de la partie de bord externe opposée (13a).
